Europäisches Patentamt

European Patent Office

Office européen des brevets

(11) Publication number: **0 234 957 B1**

# EUROPEAN PATENT SPECIFICATION

(45) Date of publication of patent specification: **16.12.92**   (51) Int. Cl.5: **H04N 5/93, G11B 20/10**

(21) Application number: **87301823.8**

(22) Date of filing: **02.03.87**

(54) **Sync signal detection apparatus.**

(30) Priority: **28.02.86 JP 45759/86**

(43) Date of publication of application:
**02.09.87 Bulletin  87/36**

(45) Publication of the grant of the patent:
**16.12.92 Bulletin  92/51**

(84) Designated Contracting States:
**DE FR GB**

(56) References cited:
**US-A- 4 072 987**
**US-A- 4 124 778**

**PATENT ABSTRACTS OF JAPAN, vol. 7, no.
231 (P-229), 13th October 1983; & JP - A - 58
121 113**

(73) Proprietor: **SHARP KABUSHIKI KAISHA
22-22 Nagaike-cho Abeno-ku
Osaka 545(JP)**

(72) Inventor: **Kentarch, Tsuji
37-19-3 Shichijyo 1-chome
Nara-shi Nara-ken(JP)**
Inventor: **Shigemi, Maeda
2996-18 Koizumi-cho
Yamatokoriyama-shi Nara-ken(JP)**
Inventor: **Takeshi, Yamaguchi
Akebono-ryo, 2613-1 Ichinomoto-cho
Tenri-shi Nara-ken(JP)**
Inventor: **Toshihisa, Deguchi C-722 Daiya
Heights Gakuenmae
2-200-5, Gakuendaiwa-cho
Nara-shi Nara-ken(JP)**
Inventor: **Noriaki, Sakamoto
10-8 Nagamodai 1-chome Kamo-cho
Souraku-gun Kyoto-fu(JP)**
Inventor: **Shigeo, Terashima
95-86 Kaminosho-cho Nikaido
Tenri-shi Nara-ken(JP)**

(74) Representative: **Brown, Kenneth Richard et al
R.G.C. Jenkins & Co. 26 Caxton Street
London SW1H 0RJ(GB)**

EP 0 234 957 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION:

Field of the Invention:

The present invention relates to detection of a sync signal in a magnetic recorder, an optical recorder or the like.

Description of the Prior Art:

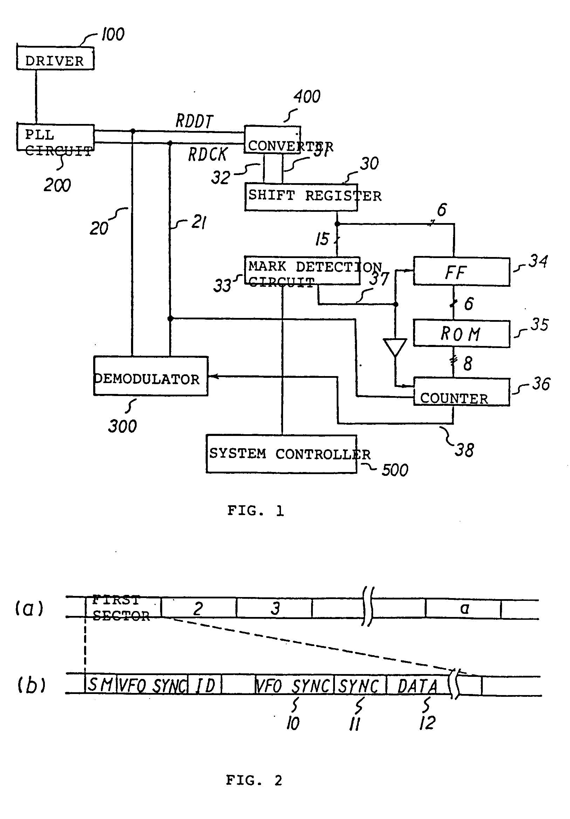

In the conventional machine for recording data on and reproducing the same from a recording medium, it is generally customary that the recording medium is so formated as shown in Fig. 2. In this diagram, SM (sector mark) is a signal representing the top of a sector; VFO SYNC is a clock signal for locking in a PLL circuit; ID is a signal of positional information relative to a track number, a sector number and so forth; and SYNC is a signal representing the top of data.

Each track on the recording medium is divided into a predetermined number $a$ of sectors as shown in Fig. 2 (a), and each sector is so formated as shown in (b). Such a sector is used as a unitary region when data is recorded. For reading out the data 12 recorded in the sector, first a PLL circuit is activated by a VFO SYNC 10 recorded in the sector, whereby a read clock for the data 12 is generated. Subsequently a SYNC signal 11 recorded in the sector is detected by reference to such read clock to generate a sync pulse which represents the top of the data 12, thereby setting next circuits (demodulation circuit and so forth) to read out the data 12. According to such a conventional read system, however, there are existent some drawbacks including that proper demodulation is not attainable in case the sync signal is not detected with accuracy, hence directly causing an increase of the error rate.

Japanese patent application JP 58-121113 (Patent Abstracts of Japan, Vol. 7, No. 231 (P229)) discloses a configuration in which a plurality of different synchronizing patterns are set, and in a detection mode all of the synchronizing patterns are held in the shift register, and the contents of the shift register are simultaneously compared with a plurality of predetermined reference synchronizing patterns. The logical OR of the comparison results is used for accommodating an error in the synchronizing patterns.

US-A-4 124 778 describes the use within digital information processing of a non-return to zero mark (NRZ-M), wherein a transition is provided only when a digital one occurs, and no transitions are provided when digital zeros occur.

SUMMARY OF THE INVENTION:

The present invention has been accomplished in an attempt to solve the problems mentioned above and in recognition of the desirability of realising exact detection of the sync signal.

In accordance with a first aspect of the present invention there is provided a sync signal detection apparatus for detecting a sync signal indicating the start of recorded data, the sync signal being divided into a plurality of unique marks, characterized in that each of the plurality of marks is divided into a digital sync pattern and a digital address pattern, and said apparatus comprises:

means for sequentially detecting the sync and address patterns for each of the plurality of marks in a reproduction mode; and

means for generating, in response to a predetermined number of marks being detected by said means for sequentially detecting, a sync pulse at a time dependent on the address pattern of said marks and thereby at the start of the recorded data.

In accordance with a second aspect of the present invention there is provided a method of recording data digitally on and reproducing from a recording medium, the data being recorded in a plurality of sections on the medium, each said section having associated therewith a recorded sync signal, characterized in that said sync signal is recorded as a plurality of sync signal portions each having a unique mark which is divided into a sync pattern and an address pattern which are individually and sequentially detected during reproduction, and a sync pulse is generated, in response to a predetermined number of marks being sequentially detected, at a time dependent on the address pattern of said marks and thereby at the start of the associated section of recorded data.

BRIEF DESCRIPTION OF THE DRAWINGS:

The present invention will become more fully understood from the detailed description given hereinbelow and the accompanying drawings which are given by way of illustration only, and thus are not limitative of the present invention and wherein:

Fig. 1 is a block diagram of a sync signal detection apparatus embodying the present invention;

Fig. 2 illustrates a format on a recording medium;

Figs. 3 and 4 show bit patterns of sync signals; and

Tables I and II show codes.

DESCRIPTION OF THE PREFERRED EMBODIMENT:

Hereinafter an exemplary embodiment of a sync signal detection apparatus according to the present invention will be described with reference to the accompanying drawings.

Tables I and II show codes of NRZI (non-return to zero inverted) modulation system in a sync signal detection apparatus embodying the invention.

In any magnetic recorder where audio signals are processed by pulse code modulation and a recording operation is performed by the use of a rotary head without forming a guard band, a low-frequency component is cut off due to the differential output characteristic in magnetic recording and also by a rotary transformer in addition to the low-frequency crosstalk from an adjacent track, so that there exists a problem of failure in achieving high-fidelity reproduction of the low-frequency component.

Accordingly, in such apparatus where the recording/reproducing frequency band is narrow and the low-frequency component needs to be minimized, it is effective to process the record signal by a modulation system in which the frequency spectrum component is small in low-frequency and DC areas. One of preferred modulation systems is NRZI which causes signal inversion at "1" in a data signal but no inversion at "0".

In this embodiment are employed 8 pre-modulation bits $\overline{m}$ and 10 post-modulation bits n, wherein a maximum inversion width Tmax is set to be 4T' (in which T' = minimum inversion width Tmin = detection window width Tw), and 4T' are not continuous. In a recording mode is adopted an NRZI (non-return to zero inverted) system where a signal is inverted at "1" but not inverted at "0". In Tables I and II, Q' and Q respectively denote direct-current storage data of a preceding-position code and that of a present-position code, and DC denotes a direct current component.

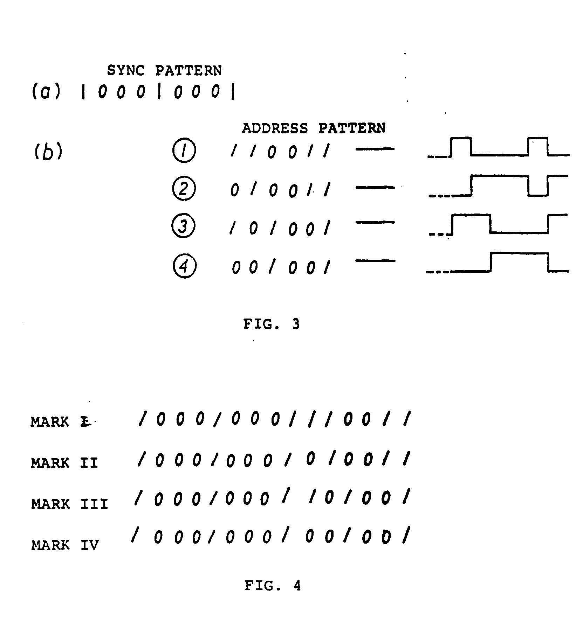

Suppose now that a recording medium processed by the NRZI modulation system of Code Tables I and II is so formated as shown in Fig. 2. The SYNC signal in Fig. 2 is composed generally of several bytes, and in this example it is composed of 6 bytes (60 code bits) which are divided into four marks each having 15 code bits. Here, the code bit is defined as a post-modulation bit. Such 15 code bits are divided into a sync pattern of 9 code bits and an address pattern of 6 code bits. The sync pattern of 9 code bits is such as shown in Fig. 3 (a) which is not generated in the code data. Meanwhile the address pattern of 6 code bits represents the ordinal number in storage of the corresponding mark. If any address pattern becomes equal to some other address pattern due to an error, it is impossible to generate a sync pulse which is exactly coincident with the top of the data 12. Therefore, in forming four address patterns each composed fixedly of 6 code bits, initially a basic pattern ① in Fig. 3 (b) is defined as a first address pattern. In this case, the basic pattern is so formed as not to include a pattern of 4T for the purpose of attaining easy distinction from the sync pattern. A second address pattern is such as denoted by ② which is an inversion of the NRZI waveform of the foregoing pattern ①. In a third address pattern ③, its first three code bits are inverted with respect to the waveform of ① or ② while the remaining three code bits have the same waveform. And a fourth address pattern ④ has an inverted waveform with respect to the pattern ③.

In detection by an NRZ (non-return to zero) system, each of the address patterns thus selected cannot become the same as any other address pattern unless there occur errors in at least three code bits.

Fig. 4 shows marks formed by combining the aforementioned sync pattern (100010001) with the above four address patterns. The marks I - IV correspond to a SYNC signal and are written in a recording mode continuously with VFO SYNC 10 as shown in Fig. 2 (b).

An embodiment in which the 8/10 conversion system is used in an apparatus according to the invention will be described. In the 8/10 conversion system, the pre-modulation bit number m is 8, and the post-modulation bit number n is 10, and the conversion summarized in Tables I and II is conducted.

In Tables I and II, "DATA" indicates pre-modulation 8-bit strings, and "CODE" post-modulation 10-bit strings. Table I is a conversion table for the case in which the direct-current storage data Q' is "0", and Table II a conversion table for the case in which the direct-current storage data Q' is "1". For example, Table I shows that "0A(HEX)" in the DATA column is "00001010" in decimal and corresponds to "17D-(HEX)" in the CODE column which is "0101111101" in decimal. The Q column indicates direct-current

3

storage data of a present-position code for the succeeding conversion. At the succeeding conversion, the direct-current storage data Q is given as the direct-current storage data of a preceding-position code so as to suppress the direct-current component in the sequential conversion. For example, a sequential conversion of a 3-byte data of 0A/4F/AF will be described. First, "0A" is converted using Table I to "17D" in which the direct-current component DC is "0" and the direct-current storage data Q is "1". Since the direct-current storage data Q in the conversion of "0A" is "1", the direct-current storage data Q' in the conversion of "4F" is "1", and hence Table II is searched, thereby converting "4F" into "33A" in which the direct-current component DC is "-2" and the direct-current storage data Q is "0". The direct-current storage data Q' in the conversion of "AF" is set to "0" so that Table I is searched, resulting in that "AF" is converted into "2FA" in which the direct-current component DC is "+2". The addition of the three direct-current components DC shows that the resulting direct-current component DC in the sequential conversion is 0 (0 + (-2) + (+2) = 0), i.e. a selection conversion with a suppressed direct-current component is performed.

In the post-modulation bit strings obtained by the 8/10 conversion system, as described above, the maximum inversion width Tmax is set to 4T' (wherein T' = minimum width Tmin = detection window width Tw), and the width of 4T' does not appear continuously. In a recording mode, the NRZI system in which a signal is inverted at "1" and not inverted at "0" is employed.

Fig. 1 is a schematic block diagram of an apparatus for reproducing the signals recorded as described above.

In Fig. 1, the VFO SYNC 10 is read out by a driver 100 which performs a recording/reproducing operation, and the data thus read out is synchronized by a PLL circuit 200, which then outputs read data RDDT 20 (VFO SYNC, SYNC, DATA and so forth) and a read clock RDCK 21 used for reading out the data RDDT 20. The read data RDDT 20 and the read clock RDCK 21 are fed to a demodulator 300 and a converter 400, respectively. The read data RDDT 20 inputted to the converter 400 is converted from the NRZI signal into an NRZ (non-return to zero) signal. Read data 31 obtained by such conversion into the NRZ signal is changed to a parallel form by a shift register 30. The parallel data of 15 high-order code bits included in the SYNC are introduced to a mark detection circuit 33, while the data of 6 low-order code bits is introduced to a flip-flop FF 34. In the mark detection circuit 33, a check for coincidence of mark patterns is executed with respect to every 15 code bits, and a detection pulse 37 is outputted when a predetermined number (one in this example) of marks is detected. Then the detected marks are counted and the result is outputted to a system controller 500. Meanwhile in response to the detection pulse 37, the flip-flop FF 34 latches the input data (address pattern) and feeds it to a ROM 35.

In case the second address pattern ② is inputted to the ROM 35, "30" corresponding to the entire bits of the remaining marks III and IV is outputted in parallel from the ROM 35 and then is fed to a counter circuit 36. The counter circuit 36 reset by an inverted pulse of the detection pulse 37 starts counting the number of RDCK 21 inputted from the ROM 35 thereafter and generates a sync pulse 38. This sync pulse 38 represents the top of the data 12 and serves to reset the demodulation circuit 300, which is thereby rendered ready for proper demodulation of the data 12.

In executing a read check immediately after write, the sync signal recorded in the sector is judged to be erroneous or not by the system controller 500 in accordance with the result of counting the output of the mark detection circuit 33 and, in case the recorded sync signal is erroneous, rerecording is performed in the other sector. Thus, the reliability of sync signal detection can be enhanced with respect to any induced error as well.

In the present invention, as described hereinabove, the sync signal is divided into a plurality of marks, each of which is further divided into a sync pattern and an address pattern and then is recorded. In case any error occurs in the sync signal at the time of detection, an accurate sync pulse can still be produced if more than a predetermined number of marks are detected. Although a description has been given on NRZI modulation in the above embodiment, the same effect is attainable by some other modulation as well. It is to be understood that the aforementioned is merely illustrative with regard to the number of sync signal bytes, the number of division thereof, and the numbers of bits of an address pattern and a sync pattern. And in particular, more precise sync pulses can be produced by increasing the number of division of sync patterns and the number of bits of address patterns.

As is obvious from the description given above, the present invention is capable of ensuring accurate synchronization for the reproduced data with a smaller number of bits, hence realizing further enhancement of the data reliability.

4

| DATA | | CODE | | | |
|---|---|---|---|---|---|
| | | Q' = 0 | | | |
| HEX | M······L | HEX | M········L | DC | Q |
| 00 | 00000000 | 155 | 0101010101 | 00 | 1 |
| 01 | 00000001 | 157 | 0101010111 | 00 | 0 |
| 02 | 00000010 | 15D | 0101011101 | 00 | 0 |
| 03 | 00000011 | 15F | 0101011111 | 00 | 1 |
| 04 | 00000100 | 149 | 0101001001 | 00 | 0 |
| 05 | 00000101 | 14B | 0101001011 | 00 | 1 |
| 06 | 00000110 | 14E | 0101001110 | 00 | 1 |
| 07 | 00000111 | 15A | 0101011010 | 00 | 1 |
| 08 | 00001000 | 175 | 0101110101 | 00 | 0 |
| 09 | 00001001 | 177 | 0101110111 | 00 | 1 |
| 0A | 00001010 | 17D | 0101111101 | 00 | 1 |
| 0B | 00001011 | 17F | 0101111111 | 00 | 0 |
| 0C | 00001100 | 169 | 0101101001 | 00 | 1 |
| 0D | 00001101 | 16B | 0101101011 | 00 | 0 |
| 0E | 00001110 | 16E | 0101101110 | 00 | 0 |
| 0F | 00001111 | 17A | 0101111010 | 00 | 0 |

TABLE I (PART I)

```
10  00010000     352  1101010010  00  1
11  00010001     112  0100010010  +2  0
12  00010010     152  0101010010  00  0
13  00010011     172  0101110010  00  1
14  00010100     371  1101110001  +2  1
15  00010101     373  1101110011  +2  0
16  00010110     376  1101110110  +2  0
17  00010111     372  1101110010  00  0
18  00011000     165  0101100101  +2  0
19  00011001     167  0101100111  +2  1
1A  00011010     16D  0101101101  +2  1
1B  00011011     16F  0101101111  +2  0
1C  00011100     179  0101111001  +2  1
1D  00011101     17B  0101111011  +2  0
1E  00011110     17E  0101111110  +2  0
1F  00011111     16A  0101101010  +2  0

20  00100000     1D5  0111010101  00  0
21  00100001     1D7  0111010111  00  1
22  00100010     1DD  0111011101  00  1
23  00100011     1DF  0111011111  00  0
24  00100100     3D1  1111010001  +2  1
25  00100101     3D3  1111010011  +2  0
26  00100110     3D6  1111010110  +2  0
27  00100111     1DA  0111011010  00  0
28  00101000     1F5  0111110101  00  1
29  00101001     1F7  0111110111  00  0
2A  00101010     1FD  0111111101  00  0
2B  00101011     1FF  0111111111  00  1
2C  00101100     1E9  0111101001  00  0
2D  00101101     1EB  0111101011  00  1
2E  00101110     1EE  0111101110  00  1
2F  00101111     1FA  0111111010  00  1
```

TABLE I (PART II)

```
30  00110000        1D2  0111010010  00  1
31  00110001        392  1110010010  +2  0
32  00110010        3D2  1111010010  00  0
33  00110011        3F2  1111110010  00  2
34  00110100        1F1  0111110001  +2  1
35  00110101        1F3  0111110011  +2  0
36  00110110        1F6  0111110110  +2  0
37  00110111        1F2  0111110010  00  0
38  00111000        1C5  0111000101  +2  0
39  00111001        1C7  0111000111  +2  1
3A  00111010        1CD  0111001101  +2  1
3B  00111011        1CF  0111001111  +2  0
3C  00111100        1D9  0111011001  +2  1
3D  00111101        1DB  0111011011  +2  0
3E  00111110        1DE  0111011110  +2  0
3F  00111111        1CA  0111001010  +2  0

40  01000000        115  0100010101  +2  1
41  01000001        117  0100010111  +2  0
42  01000010        11D  0100011101  +2  0
43  01000011        11F  0100011111  +2  1
44  01000100        151  0101010001  +2  1
45  01000101        153  0101010011  +2  0
46  01000110        156  0101010110  +2  0
47  01000111        11A  0100011010  +2  1
48  01001000        135  0100110101  +2  0
49  01001001        137  0100110111  +2  1
4A  01001010        13D  0100111101  +2  1
4B  01001011        13F  0100111111  +2  0
4C  01001100        129  0100101001  +2  1
4D  01001101        12B  0100101011  +2  0
4E  01001110        12E  0100101110  +2  0
4F  01001111        13A  0100111010  +2  0
```

TABLE I (PART III)

| | | | |
|-----|-----------|----|---|
| 50 | 01010000 | 125 | 0100100101 00 0 |
| 51 | 01010001 | 127 | 0100100111 00 1 |
| 52 | 01010010 | 120 | 0100101101 00 1 |
| 53 | 01010011 | 12F | 0100101111 00 0 |
| 54 | 01010100 | 139 | 0100111001 00 1 |
| 55 | 01010101 | 13B | 0100111011 00 0 |
| 56 | 01010110 | 13E | 0100111110 00 0 |
| 57 | 01010111 | 12A | 0100101010 00 0 |
| 58 | 01011000 | 1A5 | 0110100101 00 1 |
| 59 | 01011001 | 1A7 | 0110100111 00 0 |
| 5A | 01011010 | 1AD | 0110101101 00 0 |
| 5B | 01011011 | 1AF | 0110101111 00 1 |
| 5C | 01011100 | 1B9 | 0110111001 00 0 |
| 5D | 01011101 | 1BB | 0110111011 00 1 |
| 5E | 01011110 | 1BE | 0110111110 00 1 |
| 5F | 01011111 | 1AA | 0110101010 00 1 |
| | | | |
| 60 | 01100000 | 095 | 0010010101 00 0 |
| 61 | 01100001 | 097 | 0010010111 00 1 |
| 62 | 01100010 | 09D | 0010011101 00 1 |
| 63 | 01100011 | 09F | 0010011111 00 0 |
| 64 | 01100100 | 291 | 1010010001 +2 1 |
| 65 | 01100101 | 293 | 1010010011 +2 0 |
| 66 | 01100110 | 296 | 1010010110 +2 0 |
| 67 | 01100111 | 09A | 0010011010 00 0 |
| 68 | 01101000 | 0B5 | 0010110101 00 1 |
| 69 | 01101001 | 0B7 | 0010110111 00 0 |
| 6A | 01101010 | 0BD | 0010111101 00 0 |
| 6B | 01101011 | 0BF | 0010111111 00 1 |
| 6C | 01101100 | 0A9 | 0010101001 00 0 |
| 6D | 01101101 | 0AB | 0010101011 00 1 |
| 6E | 01101110 | 0AE | 0010101110 00 1 |
| 6F | 01101111 | 0BA | 0010111010 00 1 |

TABLE I (PART IV)

8

| | | | | | |
|---|---|---|---|---|---|
| 70 | 01110000 | 092 | 0010010010 | 00 | 1 |
| 71 | 01110001 | 2D2 | 1011010010 | +2 | 0 |
| 72 | 01110010 | 292 | 1010010010 | 00 | 0 |
| 73 | 01110011 | 2B2 | 1010110010 | 00 | 1 |
| 74 | 01110100 | 0B1 | 0010110001 | +2 | 1 |
| 75 | 01110101 | 0B3 | 0010110011 | +2 | 0 |
| 76 | 01110110 | 0B6 | 0010110110 | +2 | 0 |
| 77 | 01110111 | 0B2 | 0010110010 | 00 | 0 |
| 78 | 01111000 | 0E5 | 0011100101 | 00 | 1 |
| 79 | 01111001 | 0E7 | 0011100111 | 00 | 0 |
| 7A | 01111010 | 0ED | 0011101101 | 00 | 0 |
| 7B | 01111011 | 0EF | 0011101111 | 00 | 1 |
| 7C | 01111100 | 0F9 | 0011111001 | 00 | 0 |
| 7D | 01111101 | 0FB | 0011111011 | 00 | 1 |
| 7E | 01111110 | 0FE | 0011111110 | 00 | 1 |
| 7F | 01111111 | 0EA | 0011101010 | 00 | 1 |
| | | | | | |
| 80 | 10000000 | 295 | 1010010101 | 00 | 1 |
| 81 | 10000001 | 297 | 1010010111 | 00 | 0 |
| 82 | 10000010 | 29D | 1010011101 | 00 | 0 |
| 83 | 10000011 | 29F | 1010011111 | 00 | 1 |
| 84 | 10000100 | 289 | 1010001001 | 00 | 0 |
| 85 | 10000101 | 28B | 1010001011 | 00 | 1 |
| 86 | 10000110 | 28F | 1010001110 | 00 | 1 |
| 87 | 10000111 | 29A | 1010011010 | 00 | 1 |
| 88 | 10001000 | 2B5 | 1010110101 | 00 | 0 |
| 89 | 10001001 | 2B7 | 1010110111 | 00 | 1 |
| 8A | 10001010 | 2BD | 1010111101 | 00 | 1 |
| 8B | 10001011 | 2BF | 1010111111 | 00 | 0 |
| 8C | 10001100 | 2A9 | 1010101001 | 00 | 1 |
| 8D | 10001101 | 2AB | 1010101011 | 00 | 0 |
| 8E | 10001110 | 2AE | 1010101110 | 00 | 0 |
| 8F | 10001111 | 2BA | 1010111010 | 00 | 0 |

TABLE I (PART V)

9

| | | | |
|---|---|---|---|
| 90 | 10010000 | 325 | 1100100101 | 00 | 1 |
| 91 | 10010001 | 327 | 1100100111 | 00 | 0 |
| 92 | 10010010 | 32D | 1100101101 | 00 | 0 |
| 93 | 10010011 | 32F | 1100101111 | 00 | 1 |
| 94 | 10010101 | 33B | 1100111011 | 00 | 1 |
| 96 | 10010110 | 33E | 1100111110 | 00 | 1 |
| 97 | 10010111 | 32A | 1100101010 | 00 | 1 |
| 98 | 10011000 | 2A5 | 1010100101 | +2 | 0 |
| 99 | 10011001 | 2A7 | 1010100111 | +2 | 1 |
| 9A | 10011010 | 2AD | 1010101101 | +2 | 1 |
| 9B | 10011011 | 2AF | 1010101111 | +2 | 0 |
| 9C | 10011100 | 2B9 | 1010111001 | +2 | 1 |
| 9D | 10011101 | 2BB | 1010111011 | +2 | 0 |
| 9E | 10011110 | 2BE | 1010111110 | +2 | 0 |
| 9F | 10011111 | 2AA | 1010101010 | +2 | 0 |
| | | | | | |
| A0 | 10100000 | 2D5 | 1011010101 | +2 | 1 |
| A1 | 10100001 | 2D7 | 1011010111 | +2 | 0 |
| A2 | 10100010 | 2DD | 1011011101 | +2 | 0 |
| A3 | 10100011 | 2DF | 1011011111 | +2 | 1 |
| A4 | 10100100 | 2C9 | 1011001001 | +2 | 0 |
| A5 | 10100101 | 2CB | 1011001011 | +2 | 1 |
| A6 | 10100110 | 2CE | 1011001110 | +2 | 1 |
| A7 | 10100111 | 2DA | 1011011010 | +2 | 1 |
| A8 | 10101000 | 2F5 | 1011110101 | +2 | 0 |
| A9 | 10101001 | 2F7 | 1011110111 | +2 | 1 |
| AA | 10101010 | 2FD | 1011111101 | +2 | 1 |
| AB | 10101011 | 2FF | 1011111111 | +2 | 0 |
| AC | 10101100 | 2E9 | 1011101001 | +2 | 1 |
| AD | 10101101 | 2EB | 1011101011 | +2 | 0 |
| AE | 10101110 | 2EE | 1011101110 | +2 | 0 |
| AF | 10101111 | 2FA | 1011111010 | +2 | 0 |

TABLE I (PART VI)

```
B0   10110000       375  1101110101  00  1
B1   10110001       377  1101110111  00  0
B2   10110010       37D  1101111101  00  0
B3   10110011       37F  1101111111  00  1
B4   10110100       369  1101101001  00  0
B5   10110101       36B  1101101011  00  1
B6   10110110       36E  1101101110  00  1
B7   10110111       37A  1101111010  00  1
B8   10111000       2E5  1011100101  00  0
B9   10111001       2E7  1011100111  00  1
BA   10111010       2ED  1011101101  00  1
BB   10111011       2EF  1011101111  00  0
BC   10111100       2F9  1011111001  00  1
BD   10111101       2FB  1011111011  00  0
BE   10111110       2FE  1011111110  00  0
BF   10111111       2EA  1011101010  00  0

C0   11000000       395  1110010101  +2  1
C1   11000001       397  1110010111  +2  0
C2   11000010       39D  1110011101  +2  0
C3   11000011       39F  1110011111  +2  1
C4   11000100       389  1110001001  +2  0
C5   11000101       38B  1110001011  +2  1
C6   11000110       38E  1110001110  +2  1
C7   11000111       39A  1110011010  +2  1
C8   11001000       3B5  1110110101  +2  0
C9   11001001       3B7  1110110111  +2  1
CA   11001011       3BD  1110111101  +2  1
CB   11001011       3BF  1110111111  +2  0
CC   11001100       3A9  1110101001  +2  1
CD   11001110       3AB  1110101011  +2  0
CE   11001110       3AE  1110101110  +2  0
CF   11001111       3BA  1110111010  +2  0
```

TABLE I (PART VII)

11

| | | | | | |
|---|---|---|---|---|---|
| D0 | 11010000 | 345 | 1101000101 | +2 | 0 |
| D1 | 11010001 | 347 | 1101000111 | +2 | 1 |
| D2 | 11010010 | 34D | 1101001101 | +2 | 1 |
| D3 | 11010011 | 34F | 1101001111 | +2 | 0 |
| D4 | 11010100 | 359 | 1101011001 | +2 | 1 |
| D5 | 11010101 | 35B | 1101011011 | +2 | 0 |
| D6 | 11010110 | 35E | 1101011110 | +2 | 0 |
| D7 | 11010111 | 34A | 1101001010 | +2 | 0 |
| D8 | 11011000 | 3A5 | 1110100101 | 00 | 0 |
| D9 | 11011001 | 3A7 | 1110100111 | 00 | 1 |
| DA | 11011010 | 3AD | 1110101101 | 00 | 1 |
| DB | 11011011 | 3AF | 1110101111 | 00 | 0 |
| DC | 11011100 | 3B9 | 1110111001 | 00 | 1 |
| DD | 11011101 | 3BB | 1110111011 | 00 | 0 |
| DE | 11011110 | 3BE | 1110111110 | 00 | 0 |
| DF | 11011111 | 3AA | 1110101010 | 00 | 0 |
| | | | | | |
| E0 | 11100000 | 3D5 | 1111010101 | 00 | 1 |
| E1 | 11100001 | 3D7 | 1111010111 | 00 | 0 |
| E2 | 11100010 | 3DD | 1111011101 | 00 | 0 |
| E3 | 11100011 | 3DF | 1111011111 | 00 | 1 |
| E4 | 11100100 | 3C9 | 1111001001 | 00 | 0 |
| E5 | 11100101 | 3CB | 1111001011 | 00 | 1 |
| E6 | 11100110 | 3CE | 1111001110 | 00 | 1 |
| E7 | 11100111 | 3DA | 1111011010 | 00 | 1 |
| E8 | 11101000 | 3F5 | 1111110101 | 00 | 0 |
| E9 | 11101001 | 3F7 | 1111110111 | 00 | 1 |
| EA | 11101010 | 3FD | 1111111101 | 00 | 1 |
| EB | 11101011 | 3FF | 1111111111 | 00 | 0 |
| EC | 11101100 | 3E9 | 1111101001 | 00 | 1 |
| ED | 11101101 | 3EB | 1111101011 | 00 | 0 |
| EE | 11101110 | 3EE | 1111101110 | 00 | 0 |
| EF | 11101111 | 3FA | 1111111010 | 00 | 0 |

TABLE I (PART VIII)

```
F 0  11110000      3 5 5  1101010101  00  0
F 1  11110001      3 5 7  1101010111  00  1
F 2  11110010      3 5D   1101011101  00  1
F 3  11110011      3 5F   1101011111  00  0
F 4  11110100      3 4 9  1101001001  00  1
F 5  11110101      3 4B   1101001011  00  0
F 6  11110110      3 4E   1101001110  00  0
F 7  11110111      3 5A   1101011010  00  0
F 8  11111000      3E 5   1111100101  +2  0
F 9  11111001      3E 7   1111100111  +2  1
FA   11111010      3ED    1111101101  +2  1
FB   11111011      3EF    1111101111  +2  0
FC   11111100      3F 9   1111110001  +2  1
FD   11111101      3FB    1111111011  +2  0
FE   11111110      3FE    1111111110  +2  0
FF   11111111      3EA    1111101010  +2  0


SYNC. PATTERN      111  0100010001  00  1
```

TABLE I (PART IX)

13

DATA                    CODE

                        Q' = 1

HEX M······L            HEX M········L DC Q

| HEX | M······L | HEX | M········L | DC | Q |
|-----|----------|-----|------------|----|----|
| 00 | 00000000 | 155 | 0101010101 | 00 | 0 |
| 01 | 00000001 | 157 | 0101010111 | 00 | 1 |
| 02 | 00000010 | 15D | 0101011101 | 00 | 1 |
| 03 | 00000011 | 15F | 0101011111 | 00 | 0 |
| 04 | 00000100 | 149 | 0101001001 | 00 | 1 |
| 05 | 00000101 | 14B | 0101001011 | 00 | 0 |
| 06 | 00000110 | 14E | 0101001110 | 00 | 0 |
| 07 | 00000111 | 15A | 0101011010 | 00 | 0 |
| 08 | 00001000 | 175 | 0101110101 | 00 | 1 |
| 09 | 00001001 | 177 | 0101110111 | 00 | 0 |
| 0A | 00001010 | 17D | 0101111101 | 00 | 0 |
| 0B | 00001011 | 17F | 0101111111 | 00 | 1 |
| 0C | 00001100 | 169 | 0101101001 | 00 | 0 |
| 0D | 00001101 | 16B | 0101101011 | 00 | 1 |
| 0E | 00001110 | 16E | 0101101110 | 00 | 1 |
| 0F | 00001111 | 17A | 0101111010 | 00 | 1 |

TABLE II (PART I)

14

```
10  00010000    352  1101010010  00   0
11  00010001    312  1100010010  -2   0
12  00010010    152  0101010010  00   1
13  00010011    172  0101110010  00   0
14  00010100    171  0101110001  -2   1
15  00010101    173  0101110011  -2   0
16  00010110    176  0101110110  -2   0
17  00010111    372  1101110010  00   1
18  00011000    365  1101100101  -2   0
19  00011001    367  1101100111  -2   1
1A  00011010    36D  1101101101  -2   1
1B  00011011    36F  1101101111  -2   0
1C  00011100    379  1101111001  -2   1
1D  00011101    37B  1101111011  -2   0
1E  00011110    37E  1101111110  -2   0
1F  00011111    36A  1101101010  -2   0

20  00100000    1D5  0111010101  00   1
21  00100001    1D7  0111010111  00   0
22  00100010    1DD  0111011101  00   0
23  00100011    1DF  0111011111  00   1
24  00100100    1D1  0111010001  -2   1
25  00100101    1D3  0111010011  -2   0
26  00100110    1D6  0111010110  -2   0
27  00100111    1DA  0111011010  00   1
28  00101000    1F5  0111110101  00   0
29  00101001    1F7  0111110111  00   1
2A  00101010    1FD  0111111101  00   1
2B  00101011    1FF  0111111111  00   0
2C  00101100    1E9  0111101001  00   1
2D  00101101    1EB  0111101011  00   0
2E  00101110    1EE  0111101110  00   0
2F  00101111    1FA  0111111010  00   0
```

TABLE II (PART II)

15

EP 0 234 957 B1

```
30  00110000      1D2  0111010010  00   0
31  00110001      192  0110010010  -2   0
32  00110010      3D2  1111010010  00   1
33  00110011      3F2  1111110010  00   0
34  00110100      3F1  1111110001  -2   1
35  00110101      3F3  1111110011  -2   0
36  00110110      3F6  1111110110  -2   0
37  00110111      1F2  0111110010  00   1
38  00111000      3C5  1111000101  -2   0
39  00111001      3C7  1111000111  -2   1
3A  00111010      3CD  1111001101  -2   1
3B  00111011      3CF  1111001111  -2   0
3C  00111100      3D9  1111011001  -2   1
3D  00111101      3DB  1111011011  -2   0
3E  00111110      3DE  1111011110  -2   0
3F  00111111      3CA  1111001010  -2   0

40  01000000      315  1100010101  -2   1
41  01000001      317  1100010111  -2   0
42  01000010      31D  1100011101  -2   0
43  01000011      31F  1100011111  -2   1
44  01000100      351  1101010001  -2   1
45  01000101      353  1101010011  -2   0
46  01000110      356  1101010110  -2   0
47  01000111      31A  1100011010  -2   1
48  01001000      335  1100110101  -2   0
49  01001001      337  1100110111  -2   1
4A  01001010      33D  1100111101  -2   1
4B  01001011      33F  1100111111  -2   0
4C  01001100      329  1100101001  -2   1
4D  01001101      32B  1100101011  -2   0
4E  01001110      32E  1100101110  -2   0
4F  01001111      33A  1100111010  -2   0
```

TABLE II (PART III)

16

| | | | | |
|---|---|---|---|---|
| 50 | 01010000 | 125 | 0100100101 | 00 1 |
| 51 | 01010001 | 127 | 0100100111 | 00 0 |
| 52 | 01010010 | 12D | 0100101101 | 00 0 |
| 53 | 01010011 | 12F | 0100101111 | 00 1 |
| 54 | 01010100 | 139 | 0100111001 | 00 0 |
| 55 | 01010101 | 13B | 0100111011 | 00 1 |
| 56 | 01010110 | 13E | 0100111110 | 00 1 |
| 57 | 01010111 | 12A | 0100101010 | 00 1 |
| 58 | 01011000 | 1A5 | 0110100101 | 00 0 |
| 59 | 01011001 | 1A7 | 0110100111 | 00 1 |
| 5A | 01011010 | 1AD | 0110101101 | 00 1 |
| 5B | 01011011 | 1AF | 0110101111 | 00 0 |
| 5C | 01011100 | 1B9 | 0110111001 | 00 1 |
| 5D | 01011101 | 1BB | 0110111011 | 00 0 |
| 5E | 01011110 | 1BE | 0110111110 | 00 0 |
| 5F | 01011111 | 1AA | 0110101010 | 00 0 |
| | | | | |
| 60 | 01100000 | 095 | 0010010101 | 00 1 |
| 61 | 01100001 | 097 | 0010010111 | 00 0 |
| 62 | 01100010 | 09D | 0010011101 | 00 0 |
| 63 | 01100011 | 09F | 0010011111 | 00 1 |
| 64 | 01100100 | 091 | 0010010001 | -2 1 |
| 65 | 01100101 | 093 | 0010010011 | -2 0 |
| 66 | 01100110 | 096 | 0010010110 | -2 0 |
| 67 | 01100111 | 09A | 0010011010 | 00 1 |
| 68 | 01101000 | 0B5 | 0010110101 | 00 0 |
| 69 | 01101001 | 0B7 | 0010110111 | 00 1 |
| 6A | 01101010 | 0BD | 0010111101 | 00 1 |
| 6B | 01101011 | 0BF | 0010111111 | 00 0 |
| 6C | 01101100 | 0A9 | 0010101001 | 00 1 |
| 6D | 01101101 | 0AB | 0010101011 | 00 0 |
| 6E | 01101110 | 0AE | 0010101110 | 00 0 |
| 6F | 01101111 | 0BA | 0010111010 | 00 0 |

TABLE II (PART IV)

17

| | | | | | | |
|---|---|---|---|---|---|---|
| 70 | 01110000 | 092 | 0010010010 | 00 | 0 | |
| 71 | 01110001 | 0D2 | 0011010010 | −2 | 0 | |
| 72 | 01110010 | 292 | 1010010010 | 00 | 1 | |
| 73 | 01110011 | 2B2 | 1010110010 | 00 | 0 | |
| 74 | 01110100 | 2B1 | 1010110001 | −2 | 1 | |
| 75 | 01110101 | 2B3 | 1010110011 | −2 | 0 | |
| 76 | 01110110 | 2B6 | 1010110110 | −2 | 0 | |
| 77 | 01110111 | 0B2 | 0010110010 | 00 | 1 | |
| 78 | 01111000 | 0E5 | 0011100101 | 00 | 0 | |
| 79 | 01111001 | 0E7 | 0011100111 | 00 | 1 | |
| 7A | 01111010 | 0ED | 0011101101 | 00 | 1 | |
| 7B | 01111011 | 0EF | 0011101111 | 00 | 0 | |
| 7C | 01111100 | 0F9 | 0011111001 | 00 | 1 | |
| 7D | 01111101 | 0FB | 0011111011 | 00 | 0 | |
| 7E | 01111110 | 0FE | 0011111110 | 00 | 0 | |
| 7F | 01111111 | 0EA | 0011101010 | 00 | 0 | |
| | | | | | | |
| 80 | 10000000 | 295 | 1010010101 | 00 | 0 | |
| 81 | 10000001 | 297 | 1010010111 | 00 | 1 | |
| 82 | 10000010 | 29D | 1010011101 | 00 | 1 | |
| 83 | 10000011 | 29F | 1010011111 | 00 | 0 | |
| 84 | 10000100 | 289 | 1010001001 | 00 | 1 | |
| 85 | 10000101 | 28B | 1010001011 | 00 | 0 | |
| 86 | 10000110 | 28E | 1010001110 | 00 | 0 | |
| 87 | 10000111 | 29A | 1010011010 | 00 | 0 | |
| 88 | 10001000 | 2B5 | 1010110101 | 00 | 1 | |
| 89 | 10001001 | 2B7 | 1010110111 | 00 | 0 | |
| 8A | 10001010 | 2BD | 1010111101 | 00 | 0 | |
| 8B | 10001011 | 2BF | 1010111111 | 00 | 1 | |
| 8C | 10001100 | 2A9 | 1010101001 | 00 | 0 | |
| 8D | 10001101 | 2AB | 1010101011 | 00 | 1 | |
| 8E | 10001110 | 2AE | 1010101110 | 00 | 1 | |
| 8F | 10001111 | 2BA | 1010111010 | 00 | 1 | |

TABLE II (PART V)

18

| | | | | | |
|---|---|---|---|---|---|
| 90 | 10010000 | 325 | 1100100101 | 00 | 0 |
| 91 | 10010001 | 327 | 1100100111 | 00 | 1 |
| 92 | 10010010 | 32D | 1100101101 | 00 | 1 |
| 93 | 10010011 | 32F | 1100101111 | 00 | 0 |
| 94 | 10010100 | 339 | 1100111001 | 00 | 1 |
| 95 | 10010101 | 33B | 1100111011 | 00 | 0 |
| 96 | 10010110 | 33E | 1100111110 | 00 | 0 |
| 97 | 10010111 | 32A | 1100101010 | 00 | 0 |
| 98 | 10011000 | 0A5 | 0010100101 | −2 | 0 |
| 99 | 10011001 | 0A7 | 0010100111 | −2 | 1 |
| 9A | 10011010 | 0AD | 0010101101 | −2 | 1 |
| 9B | 10011011 | 0AF | 0010101111 | −2 | 0 |
| 9C | 10011100 | 0B9 | 0010111001 | −2 | 1 |
| 9D | 10011101 | 0BB | 0010111011 | −2 | 0 |
| 9E | 10011110 | 0BE | 0010111110 | −2 | 0 |
| 9F | 10011111 | 0AA | 0010101010 | −2 | 0 |
| | | | | | |
| A0 | 10100000 | 0D5 | 0011010101 | −2 | 1 |
| A1 | 10100001 | 0D7 | 0011010111 | −2 | 0 |
| A2 | 10100010 | 0DD | 0011011101 | −2 | 0 |
| A3 | 10100011 | 0DF | 0011011111 | −2 | 1 |
| A4 | 10100100 | 0C9 | 0011001001 | −2 | 0 |
| A5 | 10100101 | 0CB | 0011001011 | −2 | 1 |
| A6 | 10100110 | 0CE | 0011001110 | −2 | 1 |
| A7 | 10100111 | 0DA | 0011011010 | −2 | 1 |
| A8 | 10101000 | 0F5 | 0011110101 | −2 | 0 |
| A9 | 10101001 | 0F7 | 0011110111 | −2 | 1 |
| AA | 10101010 | 0FD | 0011111101 | −2 | 1 |
| AB | 10101011 | 0FF | 0011111111 | −2 | 0 |
| AC | 10101100 | 0E9 | 0011101001 | −2 | 1 |
| AD | 10101101 | 0EB | 0011101011 | −2 | 0 |
| AE | 10101110 | 0EE | 0011101110 | −2 | 0 |
| AF | 10101111 | 0FA | 0011111010 | −2 | 0 |

TABLE II (PART VI)

19

```
B0  10110000      375  1101110101  00  0
B1  10110001      377  1101110111  00  1
B2  10110010      37D  1101111101  00  1
B3  10110011      37F  1101111111  00  0
B4  10110100      369  1101101001  00  1
B5  10110101      36B  1101101011  00  0
B6  10110110      36E  1101101110  00  0
B7  10110111      37A  1101111010  00  0
B8  10111000      2E5  1011100101  00  1
B9  10111001      2E7  1011100111  00  0
BA  10111010      2ED  1011101101  00  0
BB  10111011      2EF  1011101111  00  1
BC  10111100      2F9  1011111001  00  0
BD  10111101      2FB  1011111011  00  1
BE  10111110      2FE  1011111110  00  1
BF  10111111      2EA  1011101010  00  1


C0  11000000      195  0110010101  -2  1
C1  11000001      197  0110010111  -2  0
C2  11000010      19D  0110011101  -2  0
C3  11000011      19F  0110011111  -2  1
C4  11000100      189  0110001001  -2  0
C5  11000101      18B  0110001011  -2  1
C6  11000110      18E  0110001110  -2  1
C7  11000111      19A  0110011010  -2  1
C8  11001000      1B5  0110110101  -2  0
C9  11001001      1B7  0110110111  -2  1
CA  11001010      1BD  0110111101  -2  1
CB  11001011      1BF  0110111111  -2  0
CC  11001100      1A9  0110101001  -2  1
CD  11001101      1AB  0110101011  -2  0
CE  11001110      1AE  0110101110  -2  0
CF  11001111      1BA  0110111010  -2  0
```

TABLE II (PART VII)

20

```
D0  11010000      145  0101000101  -2  0
D1  11010001      147  0101000111  -2  1
D2  11010010      14D  0101001101  -2  1
D3  11010011      14F  0101001111  -2  0
D4  11010100      159  0101011001  -2  1
D5  11010101      15B  0101011011  -2  0
D6  11010110      15E  0101011110  -2  0
D7  11010111      14A  0101001010  -2  0
D8  11011000      3A5  1110100101  00  1
D9  11011001      3A7  1110100111  00  0
DA  11011010      3AD  1110101101  00  0
DB  11011011      3AF  1110101111  00  1
DC  11011100      3B9  1110111001  00  0
DD  11011101      3BB  1110111011  00  1
DE  11011110      3BE  1110111110  00  1
DF  11011111      3AA  1110101010  00  1

E0  11100000      3D5  1111010101  00  0
E1  11100001      3D7  1111010111  00  1
E2  11100010      3DD  1111011101  00  1
E3  11100011      3DF  1111011111  00  0
E4  11100100      3C9  1111001001  00  1
E5  11100101      3CB  1111001011  00  0
E6  11100110      3CE  1111001110  00  0
E7  11100111      3DA  1111011010  00  0
E8  11101000      3F5  1111110101  00  1
E9  11101001      3F7  1111110111  00  0
EA  11101010      3FD  1111111101  00  0
EB  11101011      3FF  1111111111  00  1
EC  11101100      3E9  1111101001  00  0
ED  11101101      3EB  1111101011  00  1
EE  11101110      3EE  1111101110  00  1
EF  11101111      3FA  1111111010  00  1
```

TABLE II (PART VIII)

21

| | | | | | |
|---|---|---|---|---|---|
| F0 | 11110000 | 355 | 1101010101 | 00 | 1 |
| F1 | 11110001 | 357 | 1101010111 | 00 | 0 |
| F2 | 11110010 | 35D | 1101011101 | 00 | 0 |
| F3 | 11110011 | 35F | 1101011111 | 00 | 1 |
| F4 | 11110100 | 349 | 1101001001 | 00 | 0 |
| F5 | 11110101 | 34B | 1101001011 | 00 | 1 |
| F6 | 11110110 | 34E | 1101001110 | 00 | 1 |
| F7 | 11110111 | 35A | 1101011010 | 00 | 1 |
| F8 | 11111000 | 1E5 | 0111100101 | −2 | 0 |
| F9 | 11111001 | 1E7 | 0111100111 | −2 | 1 |
| FA | 11111010 | 1ED | 0111101101 | −2 | 1 |
| FB | 11111011 | 1EF | 0111101111 | −2 | 0 |
| FC | 11111100 | 1F9 | 0111111001 | −2 | 1 |
| FD | 11111101 | 1FB | 0111111011 | −2 | 0 |
| FE | 11111110 | 1FE | 0111111110 | −2 | 0 |
| FF | 11111111 | 1EA | 0111101010 | −2 | 0 |

SYNC. PATTERN    311  1100010001  00  1

TABLE II (PART IX)

**Claims**

1. A sync signal detection apparatus for detecting a sync signal indicating the start of recorded data (12), the sync signal (11) being divided into a plurality of unique marks characterized in that each of the plurality of marks is divided into a digital sync pattern and a digital address pattern and said apparatus comprises:

    means (33) for sequentially detecting the sync and address patterns for each of the plurality of marks in a reproduction mode; and

    means (34, 35, 36) for generating, in response to a predetermined number of marks being detected by said means for sequentially detecting, a sync pulse at a time dependent on the address pattern of said marks and thereby at the start of the recorded data.

2. The detection apparatus as defined in claim 1, wherein said sync signal is recorded in a non-return to zero inverted system.

3. A method of recording data digitally on and reproducing from a recording medium, the data being recorded in a plurality of sections on the medium, each said section having associated therewith a recorded sync signal, characterized in that said sync signal is recorded as a plurality of sync signal

EP 0 234 957 B1

portions (11) each having a unique mark which is divided into a sync pattern and an address pattern which are individually and sequentially detected during reproduction, and a sync pulse is generated, in response to a predetermined number of marks being sequentially detected, at a time dependent on the address pattern of said marks and thereby at the start of the associated section of recorded data.

**Patentansprüche**

1. Synchronsignalerkennungsgerät für das Erkennen eines Synchronsignals, das den Beginn von aufgezeichneten Daten (12) anzeigt, wobei das Synchronsignal (11) in eine Vielzahl von Einzelmarken unterteilt ist, **dadurch gekennzeichnet,** daß jede der Vielzahl von Marken in ein digitales Synchronmuster und ein digitales Adreßmuster unterteilt ist und das Gerät besteht aus:

   Mitteln (33) für die sequentielle Erkennung der Synchron- und Adreßmuster für jede der Vielzahl von Marken bei Wiedergabe-Arbeitsweise und

   Mitteln (34, 35, 36) für das Erzeugen eines Synchronimpulses zu einem Zeitpunkt, der von den Adreßmustern der Marken abhängig ist und daher bei Beginn der aufgezeichneten Daten liegt, in Reaktion auf eine vorher festgelegte Anzahl von Marken, die durch die Mittel zur sequentiellen Erkennung erkannt werden.

2. Erkennungsgerät nach Anspruch 1, in dem das Synchronsignal in einem NRZI-System (invertiertes Nichtrückkehr zu Null System) aufgezeichnet wird.

3. Verfahren der digitalen Aufzeichnung von Daten auf ein Aufzeichnungsmedium und Wiedergabe der Daten von diesem Aufzeichnungsmedium, wobei die Daten in einer Vielzahl von Sektionen auf dem Medium aufgezeichnet werden und jede Sektion ein damit assoziiertes aufgezeichnetes Synchronsignal besitzt, **dadurch gekennzeichnet,** daß das Synchronsignal als eine Vielzahl von Synchronsignalbereichen (11) aufgezeichnet wird und jeder Bereich eine Einzelmarke besitzt, die in ein Synchronmuster und in ein Adreßmuster unterteilt ist, die bei der Wiedergabe einzeln und sequentiell erkannt werden und daß zu einem Zeitpunkt, der vom Adreßmuster der Marken abhängig ist und dadurch zu Beginn der assoziierten Sektion der aufgezeichneten Daten liegt, in Reaktion auf eine vorher festgelegte Anzahl von Marken, die erkannt werden, ein Synchronsignal erzeugt wird.

**Revendications**

1. Appareil de détection de signal de synchronisation pour détecter un signal de synchronisation indiquant le début des données enregistrées (12), le signal de synchronisation (11) étant divisé en une pluralité de repères exclusifs, appareil caractérisé en ce que chacun de la pluralité des repères est divisé en une combinaison numérique de synchronisation et en une combinaison numérique d'adressage et en ce que ledit appareil comporte:

   des moyens (33) pour détecter séquentiellement la combinaison de synchronisation et la combinaison d'adressage pour chacun de la pluralité des repères en mode reproduction; et

   des moyens (34, 35, 36) pour générer, en réponse au fait qu'un nombre prédéterminé de repères a été détecté par les dits moyens prévus pour les détecter séquentiellement, une impulsion de synchronisation à un instant fonction de la combinaison d'adressage desdits repères et donc au début des données enregistrées.

2. Appareil de détection comme défini dans la revendication 1, dans lequel ledit signal de synchronisation est enregistré dans un système sans retour au niveau zéro, avec inversion.

3. Procédé d'enregistrement numérique de données sur un support d'enregistrement et de reproduction de ces données à partir de ce support, les données étant enregistrées en une pluralité de sections sur le support, chaque dite section présentant, associée avec elle, un signal de synchronisation enregistré, procédé caractérisé par le fait que ledit signal de synchronisation est enregistré sous forme d'une pluralité de portions (11) de signal de synchronisation présentant chacune un repère exclusif qui est divisé en une combinaison de synchronisation et en une combinaison d'adressage qui sont détectées, individuellement et séquentiellement, au cours de la reproduction, et par le fait qu'une impulsion de synchronisation est générée, en réponse au fait qu'un nombre prédéterminé de repères a été détecté séquentiellement, à un instant fonction de la combinaison d'adressage desdits repères et donc au début de la section associée des données enregistrées.

23

FIG. 1

FIG. 2

SYNC PATTERN

(a)  | 0 0 0 | 0 0 0 |

ADDRESS PATTERN

(b)

① / / 0 0 / /  ——

② 0 / 0 0 / /  ——

③ / 0 / 0 0 /  ——

④ 0 0 / 0 0 /  ——

FIG. 3

MARK I    / 0 0 0 / 0 0 0 / / / 0 0 / /

MARK II   / 0 0 0 / 0 0 0 / 0 / 0 0 / /

MARK III  / 0 0 0 / 0 0 0 / / 0 / 0 0 /

MARK IV   / 0 0 0 / 0 0 0 / 0 0 / 0 0 /

FIG. 4